# EUROPÄISCHE PATENTANMELDUNG

(11) **EP 3 763 223 A1**
(43) Veröffentlichungstag der Anmeldung: **13.01.2021**
(21) Anmeldenummer: 19185613.7
(22) Anmeldetag: 10.07.2019
(51) Int. Cl.: A23L 2/54

(54) **VERFAHREN ZUR AUSGABE EINES MIT EINEM GAS ANGEREICHERTEN KAFFEE- ODER TEEGETRÄNKS**

(71) Anmelder: FRANKE Kaffeemaschinen AG, 4663 Aarburg (CH)
(72) Erfinder: Vetterli, Heinz, 8855 Wangen (CH); Müller, Simon, 5037 Muhen (CH)
(74) Vertreter: Lemcke, Brommer & Partner Patentanwälte Partnerschaft mbB

(57) **Zusammenfassung**

Bei einem Verfahren zur Ausgabe eines mit einem Gas angereicherten Kaffee- oder Teegetränks, bei dem das Kaffee- oder Teegetränk in flüssiger Form als Fertiggetränk oder Konzentrat in einem Vorratsbehälter (2) vorgehalten wird, ist vorgesehen, dass das Fertiggetränk mittels einer elektrischen Pumpe (3) aus dem Vorratsbehälter (2) zu einem Getränkeauslass (7) gefördert wird, wobei das Gas dem angesaugten Kaffee- oder Teegetränk saugseitig der Pumpe (3) zugeführt wird, und dass das mit dem Gas angereicherte Kaffee- oder Teegetränk über ein in Förderrichtung hinter der Pumpe angeordnetes Gegendruckelement (6) zu dem Getränkeauslass (7) gefördert wird.

## Beschreibung

Die vorliegende Erfindung betrifft ein Verfahren zur Ausgabe eines mit einem Gas angereichten Kaffee- oder Teegetränks, bei dem das Kaffee- oder Teegetränk in flüssiger Form als Fertiggetränk oder Konzentrat in einem Vorratsbehälter vorgehalten wird.

In letzter Zeit werden vermehrt neben klassischen, frisch gebrühten Kaffeegetränken wie Espresso, Cappuccino oder Filterkaffee Kaffeegetränke auf Grundlage eines vorgehaltenen Fertiggetränks oder Konzentrats angeboten. Hierunter fällt insbesondere kalt extrahierter Kaffee, sogenannter Cold-Brew-Coffee, der mit kaltem Wasser über mehrere Stunden angesetzt und kalt genossen wird. Bei einer besonderen Variante wird ein solches Kaffeekaltgetränk bei der Ausgabe mit einem Gas wie Stickstoff oder Luft versetzt. Hierdurch entstehen eine üppige Schaumkrone sowie ein dichtes, cremiges Mundgefühl, ähnlich einem mit Stickstoff angereicherten dunklen Starkbier (Guinness). Am Markt hat sich ein solches Kaffeegetränk unter der englischsprachigen Bezeichnung Nitro Cold Brew Coffee etabliert.

Nach dem derzeit praktizierten Verfahren wird hierzu dem Kaffeegetränk bei der Ausgabe über eine Art Zapfanlage Stickstoff aus einer Hochdruckgasflasche oder komprimierte Luft injiziert. Die hierzu verwendeten "Zapfgeräte" werden als Einzelgeräte bereitgestellt und müssen an den Verkaufsständen zusätzlich vorgehalten und aufgestellt werden. Dies ist platz- und kostenaufwendig. Eine Integration in vorhandene Kaffeevollautomaten für den Gastronomiebereich ist hierbei nicht möglich oder angedacht.

Die Erfindung hat sich daher zur Aufgabe gestellt, ein alternatives, vereinfachtes Verfahren zur Ausgabe von mit Gas angereicherten Kaffee- oder Teegetränken anzugeben, welches es insbesondere ermöglicht, diese an herkömmlichen bzw. hierfür ausgerüsteten Kaffeevollautomaten auszugeben.

Die Aufgabe wird gelöst durch die Merkmale des Anspruchs 1. Vorteilhafte Ausbildungen sind den abhängigen Ansprüchen zu entnehmen. Eine zur Durchführung des Verfahrens geeignete Vorrichtung wird in Anspruch 11 angegeben.

Bei dem Verfahren zur Ausgabe eines mit einem Gas angereicherten Kaffee- oder Teegetränks, bei dem das Kaffee- bzw. Teegetränk in flüssiger Form als Fertiggetränk oder Konzentrat - mit oder ohne Wasser vermischt - in einem Vorratsbehälter vorgehalten wird, ist erfindungsgemäß vorgesehen, dass das Kaffee- oder Teegetränk mittels einer elektrischen Pumpe aus dem Vorratsbehälter zu einem Getränkeauslass gefördert wird, wobei das Gas dem angesaugten Kaffee- bzw. Teegetränk saugseitig der Pumpe zugeführt wird, und dass das mit dem Gas angereicherte Kaffee- bzw. Teegetränk über ein in Förderrichtung hinter der Pumpe angeordnetes Gegendruckelement zu dem Getränkeauslass gefördert wird.

Bei dem Gegendruckelement handelt es sich um einen Strömungswiderstand, gegen den die Pumpe das angesaugte Gemisch aus Kaffee- oder Teegetränk und Luft anpumpen muss, sodass am Ausgang der Pumpe eine Druckerhöhung stattfindet. Diese Druckerhöhung führt zu einer Durchmischung des Getränk-Luftgemischs in der Pumpe, und somit zu einer schaumartigen Konsistenz des Kaffee- bzw. Teegetränks. Auf diese Weise kann unter Verwendung lediglich einer Pumpe aus dem im Vorratsbehälter vorgehaltenen Fertiggetränk oder Konzentrat ein mit Gas angereichertes Kaffee- bzw. Teegetränk ausgegeben werden. Die erforderlichen Baugruppen lassen sich einfach und platzsparend in einem vorhandenen Gerät, wie etwa einem Kaffeevollautomaten oder einem zur Kühlung des Fertiggetränks vorgesehenen Kühlschrank unterbringen. Der Kühlschrank kann gleichermaßen für andere Zusätze, wie etwa Milch, Sahne, Crush-Eis oder dergleichen, genutzt werden. Auf diese Weise kann eine integrierte Getränkeausgabevorrichtung geschaffen werden.

Insbesondere ist im Rahmen der vorliegenden Erfindung vorgesehen, dass das Kaffeegetränk ein kalt extrahiertes Kaffeegetränk ist. Zur Zubereitung wird gemahlenes Kaffeepulver mit kaltem Wasser über mehrere Stunden angesetzt oder das kalte Wasser sehr langsam über mehrere Stunden unter Verwendung eines sogenannten Cold-Water-Drippers durch gemahlenes Kaffeepulver gefiltert. Dieser sogenannte Cold-Brew-Coffee ist sehr intensiv im Aroma, gut verträglich und im Gegensatz zu heiß gebrühtem Kaffee eine sehr gute Alternative bei heißem Wetter.

Zusätzlich kann der Vorratsbehälter gekühlt werden, sodass das Kaffee- bzw. Teegetränk als Kaltgetränk ausgegeben wird.

Selbstverständlich ist auch eine Erwärmung des Kaffee- oder Teegetränks bei der Ausgabe möglich, beispielsweise mittels eines in Flussrichtung hinter der Pumpe angeordneten Thermoblocks.

Wird das Kaffee- oder Teegetränk als Kaltgetränk ausgegeben, so kann dem Getränk bei der Ausgabe zusätzlich Eis zugegeben werden. Wird das Fertiggetränk in konzentrierter Form vorgehalten, so kann zusätzlich bei der Ausgabe Wasser beigefügt werden. Dies kann entweder vor der Pumpe oder hinter der Pumpe geschehen. Ebenso kann das Wasser separat am Getränkeauslass beigefügt werden. Auch die Beigabe weiterer Getränkezusätze, wie etwa Sirup, Sherry oder Likör, Milchschaum oder dergleichen, ist denkbar.

Insbesondere kann im Rahmen der vorliegenden Erfindung vorgesehen sein, dass das Gas in einem Gasdruckbehälter gespeichert wird und dass das Gas vor der Beimischung zu dem Kaffee- oder Teegetränk bis zu einem Druck nahe des Umgebungsdrucks, insbesondere weniger als 0,5 bar, weiter bevorzugt weniger als 100 mbar, höchstbevorzugt weniger als 50 mbar über dem Umgebungsdruck entspannt wird. Die Einleitung des Gases in das Kaffee- oder Teegetränk vor der Pumpe erfolgt somit im Wesentlichen drucklos. Die Durchmischung von Gas und Fertiggetränk erfolgt dann wie bereits erläutert innerhalb der Pumpe. Als Gas kann in diesem Fall insbesondere Stickstoff verwendet werden, der dem Kaffee- oder Teegetränk einen angenehmen cremigen Geschmack bzw. ein angenehm cremiges Mundgefühl verleiht.

Alternativ ist es aber genauso gut möglich, statt Stickstoff aus einem Gasdruckbehälter lediglich Umgebungsluft anzusaugen. Diese besteht bekanntlich aus ca. 80 % Stickstoff, sodass auch mit Umgebungsluft ein vergleichbares Ergebnis erzielt wird.

Als Pumpe kommt insbesondere eine Zahnradpumpe in Betracht. Es hat sich herausgestellt, dass mit diesem Pumpentyp die beste fein-cremige bzw. schaumartige Konsistenz gelingt. Dies mag an einer besonders gründlichen Durchmischung des Luft-/Getränkegemischs durch die Zahnräder der Pumpe liegen.

Als Gegendruckelement kann entweder eine Engstelle, also eine Querschnittsverengung und anschließende Erweiterung, wie etwa eine Blende oder Drossel, zum Einsatz kommen. Das Gegendruckelement kann auch durch einen einfachen Druckschlauch mit verringertem Innenquerschnitt gebildet werden. Bevorzugt im Rahmen der Erfindung ist jedoch die Verwendung eines Mischers, insbesondere eines Wendelmischers, der keine Querschnittsverengung aufweist, sondern durch mehrfache Richtungsänderung als Fließwiderstand wirkt. Außerdem bewirkt ein solcher Mischer eine mehrfache Aufteilung und Zusammenführung des mit Gas angereicherten Flüssigkeitsstroms in mehrere Teilströme, so dass eine weitere Durchmischung und Verfeinerung des cremeartigen Kaffee-Luft-Gemischs erzielt wird. Eine weitere Form eines im Rahmen der Erfindung geeigneten Fließwiderstands ist ein sogenanntes Widerstandsdurchlasselement, welches aus einer Vielzahl labyrinthartig verzweigter Strömungswege gebildet wird und ebenfalls eine mehrfache Aufteilung des Fluidstroms in Teilströme, Zusammenführung und erneute Aufteilung bewirkt.

Bei einer weiteren bevorzugten Ausführungsform kann die zugeführte Gasmenge mithilfe eines Gasdosierventils dosiert werden. Als Gasdosierventil kann beispielsweise ein einfaches Nadelventil dienen, mit dem die Luftmenge durch Einstellen der Ansaugöffnung dosiert werden kann. Bevorzugt im Rahmen der vorliegenden Erfindung wird jedoch ein getaktetes Schließventil, gegebenenfalls in Kombination mit einer festen Blende, verwendet, welches in rascher Folge öffnet und schließt und somit die Ansaugöffnung freigibt und wieder verschließt. Zur Dosierung kann in diesem Fall das Tastverhältnis, also das Verhältnis zwischen der Öffnungszeit und der Wiederholperiode, verändert werden. Somit ist das Gasdosierventil im Mittel kürzer oder länger geöffnet, um weniger bzw. mehr Luft beizumischen. Über die Luftmenge kann insbesondere auch die Konsistenz des ausgegebenen Kaffee- oder Teegetränks verändert werden.

Weitere Vorteile und Eigenschaften der Erfindung ergeben sich aus der nachfolgenden Beschreibung eines Ausführungsbeispiels anhand der Figuren. Es zeigen
- Figur 1: ein Wasserflussschema einer Vorrichtung zur Ausgabe von mit Gas angereichertem Kaffeegetränk und
- Figur 2: eine teilgeschnittene isometrische Darstellung eines im Ausführungsbeispiel verwendeten Gegendruckelements in Form eines Wendelmischers.

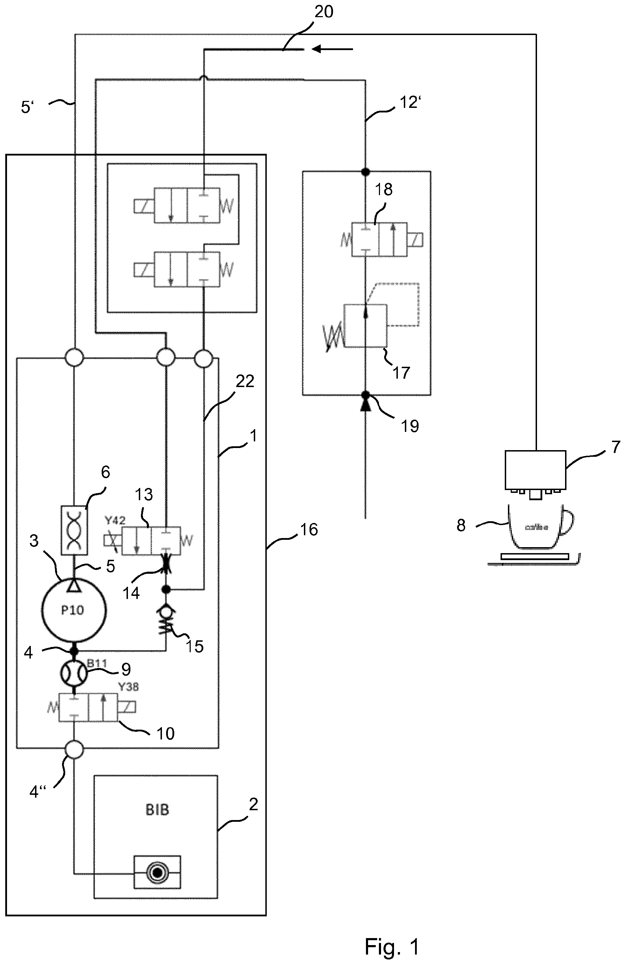

Die in Figur 1 in Form eines Wasserflussdiagramms dargestellte Vorrichtung umfasst einen Vorratsbehälter 2 mit einem kalt extrahierten Kaffeegetränk, eine elektrische Pumpe 3, die ansaugseitig über eine Ansaugleitung 4 mit dem Vorratsbehälter 2 verbunden ist, sowie ein über eine Auslassleitung 5 an der Druckseite der Pumpe 3 angeschlossenes Gegendruckelement 6 in Form eines Wendelmischers. Von dem Wendelmischer 6 führt die Auslassleitung 5' zu einem Getränkeauslass 7, an dem das mit Gas angereicherte kalte Kaffeegetränk in ein darunter positioniertes Trinkgefäß 8 ausgegeben wird. Der Getränkeauslass kann hierbei in den Auslasskopf eines Kaffeevollautomaten integriert sein, sodass das mit Gas angereicherte bzw. aufgeschäumte Kaffeegetränk als weitere Getränkeoption über den Kaffeevollautomaten ausgegeben werden kann.

In der Ansaugleitung 4 befindet sich ein Durchflussmesser 9, mit dem die Getränkemenge dosiert werden kann, sowie ein Schließventil 10, welches zu Beginn eines Getränkebezugs geöffnet und nach Beendigung des Getränkebezugs geschlossen wird, um ein Rückfließen noch in der Leitung 4 befindlichen Fluids zu verhindern. In die Ansaugleitung 4 mündet eine Gaszuführleitung 12. In der Gaszuführleitung 12 befinden sich ein Gasdosierventil 13, eine festen Blende 14 und ein Rückschlagventil 15. Das Gasdosierventil 13 ist im Ausführungsbeispiel als getaktetes Luftventil, also als in schneller Folge, intermittierend öffnend und schließend betriebenes Schaltventil ausgeführt. Die Frequenz, mit der das Luftventil betrieben wird, kann hierbei im Bereich zwischen 10 und 30 Hz liegen. Das Rückschlagventil 15 dient lediglich dazu, ein Eindringen von Flüssigkeit in die Luftzuführleitung zu begrenzen bzw. zu verhindern.

Die Pumpe 3, das Gegendruckelement 6, der Durchflussmesser 9 und das Gasdosierventil 13 sind zu einem Pumpenmodul bzw. einer Pumpenbaugruppe 1 zusammengefasst. Diese enthält außerdem das Schließventil 10 in der Zuführleitung 4 sowie das Rückschlagventil 15 und die Blende 14 in der Gaszuführleitung 12.

Pumpenmodul 1 und Vorratsbehälter 2 sind in einem Kühlschrank 16 angeordnet. Der Vorratsbehälter 2 ist hier als Einwegbehälter mit einem in einem Karton befindlichen Schlauch (BiB: Bag in Box) ausgebildet. Außerhalb des Kühlschranks 16 sind an die zu dem Pumpenmodul 1 führende Gaszuführleitung 12' ein Druckminderer 17 und ein Schließventil 18 angeschlossen. Über den Druckminderer 17 kann eingangsseitig ein hier nicht gezeigter Gasdruckbehälter, etwa eine herkömmliche Gasflasche mit ca. 200 bar Gasdruck, angeschlossen werden. Der Druckminderer 17 ist im Ausführungsbeispiel so ausgeführt bzw. eingestellt, dass er das unter Druck stehende Gas am Eingang auf einen Ausgangsdruck von lediglich 50 mbar reduziert, mit dem das Gas ansaugseitig der Pumpe in die Zuführleitung 4 eingeleitet wird. Bei einem Druckminderer (oder Druckreduzierventil) wird der Ausgangsdruck auf einen Steuereingang zugeführt und sorgt über einen Druckaufnehmer dafür, dass das ein Druckventil bei Überschreiten des vorgegebenen Soll-Ausgangsdrucks sperrt, bei unterscheiten wieder öffnet. Somit kann der Ausgangsdruck nicht über diesen voreingestellten Wert ansteigen. Als Druckaufnehmer kann hierbei ein Kolben oder eine Membran dienen.

Schließlich ist im Ausführungsbeispiel noch ein Spülanschluss 20 gezeigt, der über ein Schließventil 21 und eine Spülleitung 22 vor dem Rückschlagventil 15 in die Gaszuführleitung 12 einmündet. Nach einem Produktbezug kann über diese Spülleitung 22 ein Spülvorgang mit kaltem oder warmem Wasser durchgeführt werden. Hierzu wird das Ventil 10 am Produkteingang geschlossen, das Ventil 21 am Spülwasserzulauf 20 geöffnet und die Pumpe 3 in Betrieb gesetzt. Unter den Getränkeauslass 7 wird ein Auffanggefäß platziert, um das Spülwasser aufzufangen. Der Spülvorgang dient insbesondere dazu, das Rückschlagventil 15 freizuspülen, damit dieses nicht zusetzen und verstopfen kann. Ein im Ausführungsbeispiel weiteres, zu dem Ventil 21 parallel geschaltetes Spülventil 21' ist dafür vorgesehen, gegebenenfalls ein weiteres im Kühlschrank 16 gegebenenfalls untergebrachtes Pumpenmodul, welches hier nicht gezeigt ist, an dem Spülanschluss 20 anzuschließen.

Zum Ausgeben eines aufgeschäumten Cold-Brew-Kaffeegetränks wird das Ventil 10 am Produkteingang 4' geöffnet und die Pumpe 3 in Betrieb gesetzt. Somit wird aus dem Vorratsbehälter 2 dort vorgehaltenes Fertiggetränk angesaugt und über den Wendelmischer 6 zum Getränkeauslass 7 gefördert.

Gleichzeitig wird das Schließventil 18 am Gaseinlass 19 geöffnet und Stickstoff aus dem am Gasanschluss 19 angeschlossenen Gasdruckbehälter strömt über das Gasdosierventil 13, mit dem die zugeführte Gasmenge dosiert werden kann, die Blende 14 und das Rückschlagventil 15 zu der in die Ansaugleitung 4 einmündende Gaszuleitung 12. Die Pumpe 3 saugt somit neben dem Fertiggetränk aus dem Vorratsbehälter 2 zusätzlich Gas vom Gasanschluss 19 an. Aufgrund des Wendelmischers 6 wird am Pumpenausgang bzw. in der Pumpe 3 ein hoher Druck erzeugt wird. Dies führt zu einer Durchmischung des Luftgetränkegemischs in der Pumpe und erzeugt auf diese Weise ein cremiges bzw. schaumartiges, mit Gas angereichertes Fluid, das am Getränkeauslass 7 ausgegeben wird.

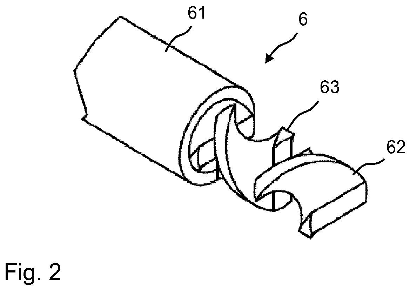

In Figur 2 ist ein als Gegendruckelement in Figur 1 eingesetzter Wendelmischer 6 dargestellt. Ein Wendelmischer ist ein sogenannter statischer Mischer, bei dem in einem rohrförmiges Gehäuse 61 mehrere hintereinander angeordnete, gegeneinander jeweils um 90° versetzte 180°-Wendel 62, 63 angeordnet sind. Außerdem haben die aufeinanderfolgenden Wendel jeweils eine gegenläufige Drehrichtung. Jeder Wendel teilt den Strom der durchströmenden Flüssigkeit in zwei Teilströme. Diese werden an jedem Übergang zum jeweils folgenden Wendel wiederum in zwei Teilströme aufgeteilt und jeweils mit Teilströmen aus dem vorangegangenen Wendel zusammengeführt. Auf diese Weise erfolgt eine Durchmischung des Flüssigkeitsstroms. Außerdem stellt der Wendelmischer einen weitgehend laminaren Strömungswiderstand dar, ohne dass hierbei der Durchflussquerschnitt verringert werden müsste. In Figur 2 ist das Gehäuse 61 des Mischers 6 ist teilweise aufgeschnitten gezeigt, um die im Inneren befindlichen, jeweils um 90° versetzten Wendelabschnitte 62, 63 zu erkennen.

## Patentansprüche

1. Verfahren zur Ausgabe eines mit einem Gas angereicherten Kaffee- oder Teegetränks, bei dem das Kaffee- oder Teegetränk in flüssiger Form als Fertiggetränk oder Konzentrat in einem Vorratsbehälter (2) vorgehalten wird, **da**
**durch gekennzeichnet,** dass
das Kaffee- oder Teegetränk mittels einer elektrischen Pumpe (3) aus dem Vorratsbehälter (2) zu einem Getränkeauslass (7) gefördert wird, wobei das Gas dem angesaugten Kaffee- bzw. Teegetränk saugseitig der Pumpe (3) zugeführt wird und
dass das mit dem Gas angereicherte Kaffee- oder Teegetränk über ein in Förderrichtung hinter der Pumpe (3) angeordnetes Gegendruckelement (6) zu dem Getränkeauslass (7) gefördert wird.

2. Verfahren nach Anspruch 1, bei dem das Kaffee- oder Teegetränk ein kalt extrahiertes Kaffee- oder Teegetränk ist.

3. Verfahren nach einem der vorangehenden Ansprüche, bei dem der Vorratsbehälter (2) gekühlt wird und das Kaffee- oder Teegetränk als Kaltgetränk ausgegeben wird.

4. Verfahren nach einem der vorangehenden Ansprüche, bei dem dem Kaffee- oder Teegetränk Wasser und/oder Eis zugegeben wird, insbesondere bei dem das Kaffee- oder Teegetränk als Konzentrat vorgehalten wird und diesem vor oder hinter der Pumpe Wasser zugegeben wird.

5. Verfahren nach einem der vorangehenden Ansprüche, bei dem das Gas in einem Gasdruckbehälter gespeichert wird, und das Gas vor der Beimischung zu dem Kaffee- oder Teegetränk bis zu einem Druck nahe des Umgebungsdrucks, insbesondere weniger als 0,5 bar, weiter bevorzugt weniger als 100 mbar über dem Umgebungsdruck, entspannt wird.

6. Verfahren nach einem der vorangehenden Ansprüche, bei dem es sich bei dem Gas um Stickstoff handelt.

7. Verfahren nach einem der Ansprüche 1 bis 4, bei dem es sich bei dem Gas um Umgebungsluft handelt, die von der Pumpe (3) zusammen mit dem Fertiggetränk angesaugt wird.

8. Verfahren nach einem der vorangehenden Ansprüche, bei dem als Pumpe (3) eine Zahnradpumpe verwendet wird.

9. Verfahren nach einem der vorangehenden Ansprüche, bei dem als Gegendruckelement eine Drossel oder ein statischer Mischer, insbesondere Wendelmischer (6) verwendet wird.

10. Verfahren nach einem der vorangehenden Ansprüche, bei dem in einer Zuleitung für das dem angesaugten Kaffee- oder Teegetränk zugeführte Gas ein Gasdosierventil (13), insbesondere ein getaktetes Schließventil, angeordnet ist, mit dem das dem Kaffee- oder Teegetränk zugeführte Gasvolumen dosiert wird.

11. Vorrichtung zur Durchführung des Verfahrens nach einem der vorangehenden Ansprüche, mit einer elektrischen Pumpe (3) zur Förderung von in einem Vorratsbehälter (2) in flüssiger Form als Fertiggetränk oder Konzentrat vorgehaltem Kaffee- oder Teegetränk, einer saugseitig der Pumpe (3) in die von dem Vorratsbehälter (2) zur Pumpe (3) führende Ansaugleitung (4) einmündende Gaszuführleitung (12) und einem in einer von der Pumpe (3) zu einem Getränkeauslass (7) führenden Getränkeleitung (5) angeordnetes Gegendruckelementüber (6) über welches das mit Gas angereichertes Kaffee- oder Teegetränk zu dem Getränkeauslass (7) gefördert wird.
